Europäisches Patentamt

European Patent Office

Office européen des brevets

(19)

(11) **EP 0 671 822 B1**

(12) **EUROPÄISCHE PATENTSCHRIFT**

(45) Veröffentlichungstag und Bekanntmachung des Hinweises auf die Patenterteilung:
**28.03.2001 Patentblatt 2001/13**

(51) Int Cl.⁷: **H04B 3/54**, H04B 1/713, H04L 27/233, H04L 5/14

(21) Anmeldenummer: **95103147.5**

(22) Anmeldetag: **06.03.1995**

(54) **Verfahren und Einrichtung zur digitalen Signalsynthese und -verarbeitung in einem Vollduplex-Datenübertragungssystem**

Method and apparatus for digital signal synthesis and processing in a full-duplex data transmission system

Procédé et dispositif de synthèse et de traitement d'un signal numérique dans un système de transmission de données en duplex intégral

(84) Benannte Vertragsstaaten:
**AT CH DE FR LI SE**

(30) Priorität: **11.03.1994 DE 4408334**

(43) Veröffentlichungstag der Anmeldung:
**13.09.1995 Patentblatt 1995/37**

(73) Patentinhaber: **ABB PATENT GmbH**
**68309 Mannheim (DE)**

(72) Erfinder: **Dostert, Klaus, Prof. Dr.**
**D-67706 Krickenbach (DE)**

(74) Vertreter: **Rupprecht, Klaus, Dipl.-Ing. et al**
**c/o ABB Patent GmbH,**
**Postfach 10 03 51**
**68128 Mannheim (DE)**

(56) Entgegenhaltungen:
**DE-A- 4 107 300          US-A- 4 311 964**

- **DOSTERT K M: "FREQUENCY-HOPPING SPREAD-SPECTRUM MODULATION FOR DIGITAL COMMUNICATIONS OVER ELECTRICAL POWER LINES" IEEE JOURNAL ON SELECTED AREAS IN COMMUNICATIONS, Bd. 8, Nr. 4, Mai 1990, Seiten 700-710, XP000197759**

## Beschreibung

Die Erfindung betrifft ein Verfahren und eine Einrichtung zum gleichzeitigen Senden und Empfangen von digitalen Informationen z.B. über elektrische Energieverteilnetze im Vollduplex-Betrieb. Es können dabei schmalbandige oder auch bandspreizende Modulationsverfahren eingesetzt werden. An zahlreichen Versuchsstrecken haben sich Verfahren wie Frequenzsprungmodulation (engl.: Frequency Hopping **FH**) oder Frequenzumtastung (engl.: Frequency Shift Keying **FSK**) in der Praxis bewährt. Ein wesentliches Kennzeichen dieser Verfahren ist, daß stets mit konstanter Signalamplitude gearbeitet wird und so eine optimale energetische Nutzung der Kanalressourcen gegeben ist. Zur Beschreibung der Erfindung wird im folgenden eine Einrichtung, die als Modem (Kurzwort für Modulator-Demodulator) bezeichnet wird, als Anwendungsbeispiel angeführt. Ein derartiges Modem dient zur gleichzeitigen oder auch wechselweisen bidirektionalen Übermittlung digitaler Informationen über Stromversorgungsleitungen innerhalb oder außerhalb von Gebäuden, d.h. es ist Vollduplex- oder auch Halbduplex-Betrieb möglich. Die Datenübertragung soll in jedem Fall resistent gegen Störungen auf den Stromversorgungsleitungen sein und trotz der widrigen Übertragungseigenschaften dieser Leitungen eine zuverlässige Kommunikation mit Datenraten bis über 2000bit/s erlauben. Des weiteren soll die gleichzeitige Aktivität mehrerer Modems am selben Stromnetz ohne gegenseitige Störbeeinflussung gewährleistet sein (Vielfachzugriff auf dasselbe Frequenzband).

Gegenstand der vorliegenden Erfindung ist ein Modem-Systemkonzept, dessen Kernstück vorteilhaft in Form einer anwenderspezifischen integrierten Schaltung **(ASIC)** realisiert wird, wobei die senderseitige Signalerzeugung und die korrelative empfängerseitige Signalverarbeitung bis hin zur Bitentscheidung parallel, d.h. gleichzeitig und mit hoher Präzision in Echtzeit erfolgen. Das digitale Konzept erlaubt den Einsatz einer praktisch unbegrenzten Vielfalt von Signalformen ohne Hardwareänderungen. Es sind verschiedene Datenraten und Frequenzbereiche in weiten Grenzen frei wählbar.

Es ist Stand der Technik, zur Informationsübertragung über Stromversorgungsnetze Systeme mit schmalbandiger oder auch mit breitbandiger, bandspreizender Modulation einzusetzen - siehe z.B. die Druckschriften P 40 01 265.4, P 40 01 266.2 und die europäischen Patente Nr. 0 200 016 undNr. 0 199 148.

Seit 1. Dezember 1991 ist die europäische Norm EN 50 065-1:1991, die den Status einer deutschen Norm hat, in Kraft. Diese Norm regelt die Nutzung des Frequenzbereichs von 3kHz...148,5kHz für Signalübertragungszwecke an elektrischen Energieverteilnetzen. Das verfügbare Band wird dabei grob in zwei Bereiche eingeteilt: Der Frequenzbereich von 3kHz...95kHz ist den Energieversorgungsunternehmen (EVU) vorbehalten; dort sind relativ hohe Sendepegel bis zu 134dBµV zulässig. Der restliche Frequenzbereich von 95kHz...148,5kHz steht dem privaten Nutzer genehmigungsfrei zur Verfügung, solange der Sendepegel 116dBµV nicht überschreitet. Dieser ziemlich niedrige Sendepegel (ca. 630mV Signalamplitude) geht einher mit einer gegenüber früheren Bundespost-Vorschriften drastisch eingeengten Bandbreite. Die EN 50 065-1 stellt hohe Anforderungen an Verfahren und Einrichtungen zur störsicheren Übertragung von Informationen über Stromversorgungsleitungen. Wegen der Amplitudenbegrenzung haben Übertragungsverfahren, die stets die volle Amplitude nutzen können, die besten Erfolgsaussichten. Solche Verfahren sind FH und FSK; sie werden auch als frequenzagil bezeichnet, weil die eingesetzten Signalformen vielfältige Frequenzvariationen erlauben müssen. Entscheidend für eine kostengünstige und zuverlässig reproduzierbare Realisierung ist ein digitales VollduplexModemkonzept, das hochintegrierbar ist, und das den jeweiligen Aufgaben leicht, d.h. ohne Hardwareänderungen, angepaßt werden kann. Die vorliegende Erfindung zeigt eine universelle vorteilhafte Lösung auf.

Die hohen zu erfüllenden Anforderungen verdeutlichen die beiden folgenden Systembeispiele:

I.) Ausgangspunkt der Betrachtungen ist die bidirektionale Übertragung binärer Informationen mit schnellen Frequenzsprüngen, d.h. während der Dauer $T_B$ eines Datenbits wird die Sendefrequenz sprungartig m-mal gewechselt, mit m=1,3,5,7... Je größer m gewählt wird, umso störresistenter erfolgt die Informationsübertragung. Bei fester Datenrate $r_D=1/T_B$ ist m durch die verfügbare Bandbreite B einerseits und durch die Grenzen der Präzision bei der Synchronisation andererseits beschränkt. Auf dem Verteilnetz eines Energieversorgungsunternehmens (EVU) steht für die Informationsübertragung gemäß der europäischen Norm EN 50 065-1 das Frequenzband von 3kHz bis 95kHz, also eine Bandbreite B=92kHz zur Verfügung. Wenn beispielsweise binäre Informationen mit einer Datenrate (Bitrate) $r_D$=-480biVs mittels Frequenzsprungverfahren zu übertragen sind, wobei m=5 Frequenzsprünge während einer Datenbitdauer $T_B$ erfolgen sollen, dann ist die Frequenzsprungrate h=2400s$^{-1}$. Der Kehrwert T=1/h der Frequenzsprungrate gibt die Dauer des Zeitintervalls an, während dessen jeweils eine der m Frequenzen gesendet wird. Die Nachrichtentheorie besagt, daß in einem Frequenzband der Breite B=92kHz bei der Frequenzsprungrate h=2400s$^{-1}$ maximal eine Anzahl N= ⌊ B/h ⌋ = ⌊ 92000/2400 ⌋ =38 Signale mit jeweils um 2400Hz versetzter Frequenz gleichzeitig übertragen werden können und ohne gegenseitige Störbeeinflussung von Empfängern, die korrelative Signalverarbeitung durchführen, fehlerfrei detektiert werden können. ⌊ ⌋ bedeutet ganzzahliger Anteil von (.). Es ist also möglich, an den Leitungen eines elektrischen Installationsnetzes, z.B. in einem weitläufigen Gebäude, bis zu 38/2=19 FH-Systeme der beschriebenen Art mit 480bit/s gleichzeitig und ohne gegenseitige Störbeeinflussung am selben Verteilnetz in Form von Vollduplex-Modems zu betreiben. Entscheidende Voraussetzung dafür ist nicht nur eine hochpräzise Signalerzeugung sondern auch das genaue Einfügen der aller Sendesignale in ein globales Zeitraster und eine erfindungsgemäß perfekte korrelative Signalverarbeitung im Empfängerteil eines jeden Modems.

Eine derart dichte Kanalbelegung - wie oben geschildert - erfordert senderseitig ganz offensichtlich hohe Präzision bei der Sendesignalerzeugung. Dabei ist wichtig, daß beim Frequenzwechsel kein Phasensprung auftritt, sondern ein kontinuierlicher Phasenübergang stattfindet. Die Frequenz hingegen muß sprungartig, d.h. ohne Einschwingvorgang wechseln. Der kontinuierliche Phasenübergang ist auch bei nicht vollständiger Kanalbelegung erforderlich, um die strengen Grenzwerte für die Außerbandstörung nach der Norm EN 50 065-1 mit vertretbarem Filteraufwand erfüllen zu können. Die obigen Anforderungen sind nur auf digitalem Wege hinreichend genau und aufwandsgünstig realisierbar. Diese Erkenntnis hat die Ausgestaltung der vorliegenden Erfindung wesentlich beeinflußt.

II.) Zum Zweck der Gebäudeautomatisierung soll ein für Nutzbauten wie z.B. Schulen, Büroetagen, Krankenhäuser oder Hotels konzipiertes schnell reagierendes und gleichzeitig bidirektional arbeitendes Installationsbussystem implementiert werden, das entsprechend EN 50 065-1 den Frequenzbereich von 95kHz bis 148,5kHz mit einer Datenrate von 2400bit/s nutzt, wobei m=1 Frequenzsprung während einer Datenbitdauer $T_B$ erfolgen soll. Die Frequenzsprungrate ist dann h=2400s$^{-1}$. Jetzt können gemäß den obigen Betrachtungen im verfügbaren Frequenzband der Breite B=53kHz maximal bis zu N= ⌊ B/h⌋ = ⌊ 53000/2400⌋ =22 Signale mit jeweils um 2400Hz versetzter Frequenz gleichzeitig übertragen werden. Also könnten maximal N/2=11 Vollduplex-Modems mit einer Datenrate von je 2400bit/s gleichzeitig aktiv sein, ohne gegenseitige Störbeeinflussung. Auch hier gilt, daß beim Frequenzwechsel kein Phasensprung auftreten darf, sondern ein kontinuierlicher Phasenübergang gewährleistet sein muß. Die Frequenz hingegen muß sprungartig, d.h. ohne Einschwingvorgang wechseln. Man nennt diese Modulation auch CPFSK (continuous phase frequency shift keying). Die genannten Anforderungen sind - wie bereits weiter oben festgestellt wurde - nur auf digitalem Wege hinreichend genau und aufwandsgünstig erfüllbar.

Die senderseitige Signalerzeugung und die empfängerseitige Signalverarbeitung verlangen bei Systemen der beschriebenen Art grundsätzlich eine Synchronisation. Im Empfangsfall ist die Synchronisation des Empfangssignals mit einem lokal im Empfänger vorhandenen Referenzsignal nötig. Im Fall der Frequenzsprungmodulation kommt dieses Referenzsignal aus einem Frequenzsynthesizer. Im Sendefall wird ebenfalls ein synchronisierter Frequenzsynthesizer benötigt, dessen informationstragenden Ausgangssignale ins Stromnetz eingespeist werden. Das Problem der Synchronisation läßt sich bei Nachrichtenübertragungssystemen, die an Stromversorgungsleitungen arbeiten, mit Hilfe der Netzwechselspannung einfach und kostengünstig lösen - siehe z.B. die europäischen Patente Nr. 0 200 016, Nr. 0 199 148 und die deutsche Patentschrift DE 41 07 300 C2.

Die Hardware- bisheriger Sende- und Empfangsgeräte zur Informationsübertragung auf elektrischen Verteilnetzen war unflexibel, d.h. man konnte die Datenrate, die Störresistenz - z.B. repräsentiert durch die Zahl der Frequenzen pro Bit - oder den Frequenzbereich nicht oder nur mit erheblichem Änderungsaufwand in jeweils zwei separaten Geräten modifizieren. Zudem war das Einfügen der Sendesignale in ein globales Zeitraster bei zahlreichen bekannten Systemkonzepten nicht vorgesehen. Dadurch wurde die empfängerseitge Signaldetektion erschwert und der optimale Betrieb eines Vielfachzugriffsystems unter optimaler Kanalausnutzung gemäß den obigen Systembeispielen nahezu ausgeschlossen. Hinzu kommt, daß bisherige Geräte nur mit großem Aufwand der EN 50 065-1 insbesondere im Hinblick auf zulässige Außerbandstörungen gerecht werden konnten.

Eine Aufgabe der vorliegenden Erfindung ist deshalb die Schaffung einer neuartigen Digitalschaltung, die alle wesentlichen Teile zur Sendesignalsynthese und zur inkohärenten korrelativen Empfangssignalverarbeitung bis hin zur Bitentscheidung beinhaltet. Die neue Digitalschaltung bietet außerdem die Möglichkeit gleichzeitig zu senden und zu empfangen, also Vollduplexbetrieb durchzuführen. Dabei ist ein Höchstmaß an Flexibilität hinsichtlich der Wahl von Übertragungsgeschwindigkeit (Datenrate), Störresistenz (Zahl der Signalformen pro Datenbit) und Frequenzwahl (Lage der benutzen Frequenzen im erlaubten Übertragungsband) gegeben. Grundvoraussetzung zur Schaffung dieser Möglichkeiten ist ein digitaler Aufbau der informationsverarbeitenden Modem-Bestandteile.

Aufgabe einer Sendeeinrichtung in einem Modem zur Übertragung digitaler Informationen über Stromversorgungsleitungen ist die präzise und zeitgenaue Erzeugung einer Vielzahl von Signalen mit relativ eng benachbarten Frequenzen. Dabei muß abhängig von den zu sendenden Informationen ein rascher phasenkontinuierlicher Frequenzwechsel möglich sein, ohne daß dabei Einschwingvorgänge auftreten. In analoger Technik aufgebaute Sendeeinrichtungen können die genannten Anforderungen nicht oder nur mit unwirtschaftlich hohem Aufwand bewerkstelligen und sind völlig unflexibel, wenn es z.B. um Änderungen der Datenrate oder der Sendefrequenzen geht.

Die Empfangseinrichtung des Modems muß in der Lage sein, Signale mit eng benachbarten Frequenzen perfekt zu trennen und so die gesendete Information wiederzugewinnen. Dazu ist signalangepaßte Filterung auf korrelativem Wege notwendig. Das Prinzip der aktiven Korrelation ist aus Standard-Lehrbüchern hinreichend bekannt. Aus einem aktiven Korrelator, der allgemein aus einer Multiplizier- und einer Integriereinheit besteht, wird ein signalangepaßtes Filter (engl.: matched filter), z.B. für Signalformen der Chipdauer $T_c$, wenn man durch Synchronisation dafür sorgt, daß die Integriereinheit an jedem Chipintervallende auf Null gesetzt wird, nachdem der während der Chipdauer aufintegrierte Wert zur Weiterverarbeitung abgetastet und gegebenenfalls gespeichert wurde. Der Aufwand für eine derartige Empfängerschaltung in Analogtechnik wäre untragbar hoch. Denn jeder Datenbit-Zweig würde einen eigenen Quadraturempfänger, bestehend aus je zwei Analogmultiplizierern mit nachgeschalteten löschbaren Integratoren und Frequenzsynthesizern, die die "H"- und "L"-Bit-Signalformen jeweils in Sinus- und in Cosinuslage bereitstellen, erfordern. Die Fertigung von Empfängern für frequenzagile Signalformen in Analogtechnik wäre mit Problemen der Bauteilselektion und aufwendigem Abgleich behaftet. Darüber hinaus wäre wenig Flexibilität hinsichtlich Parameteränderungen erzielbar. Bei Änderungen der Frequenzen und/oder der Chipdauer $T_c$ beim verwendeten Signalformsatz wäre ein Umbau der Hardware und generell ein aufwendiger Neuabgleich nicht zu umgehen.

Bisher wurde die breite Einführung von Systemen zur Informationsübertragung auf Stromnetzen nicht erreicht, obwohl es an Anwendungen nicht mangelt. Es fehlte ein Gesamtkonzept, das Sende- und Empfangseinrichtung in optimaler Weise in Form einer neuartigen aufwandsgünstigen Digitalschaltung in sich vereinigt. Die vorliegende Erfindung garantiert einfache und sichere Reproduzierbarkeit der Modemeigenschaften und mit wachsenden Produktionsstückzahlen stetig sinkende Kosten, so daß einer industriellen Serienherstellung nichts mehr im Wege steht. Die Erfindung ist somit geeignet, dem breiten Einsatz der Datenübertragung auf Stromnetzen besonders in Europa, wo die strengen Einschränkungen der EN 50 065-1 gelten, zum Durchbruch zu verhelfen. Bislang sind auf dem europäischen Markt keine Geräte zur Datenübertragung auf elektrischen Verteilnetzen erhältlich.

Das besondere Kennzeichen der vorliegenden Erfindung ist, daß senderseitige Signalerzeugung und empfängerseitige korrelative Signalverarbeitung bis hin zur Bitentscheidung digital auf der Basis eines neuartigen in sich geschlossenen Verfahrens bewerkstelligt werden. Das neuartige Verfahren eignet sich hervorragend zur Implementierung auf einer integrierten Digitalschaltung mit relativ niedriger Komplexität, wie z.B. FPGA, CMOS-Gate-Array, Cell-Array oder auch einer Vollkundenschaltung mit einer äquivalenten Gatterzahl von weniger als 10.000.

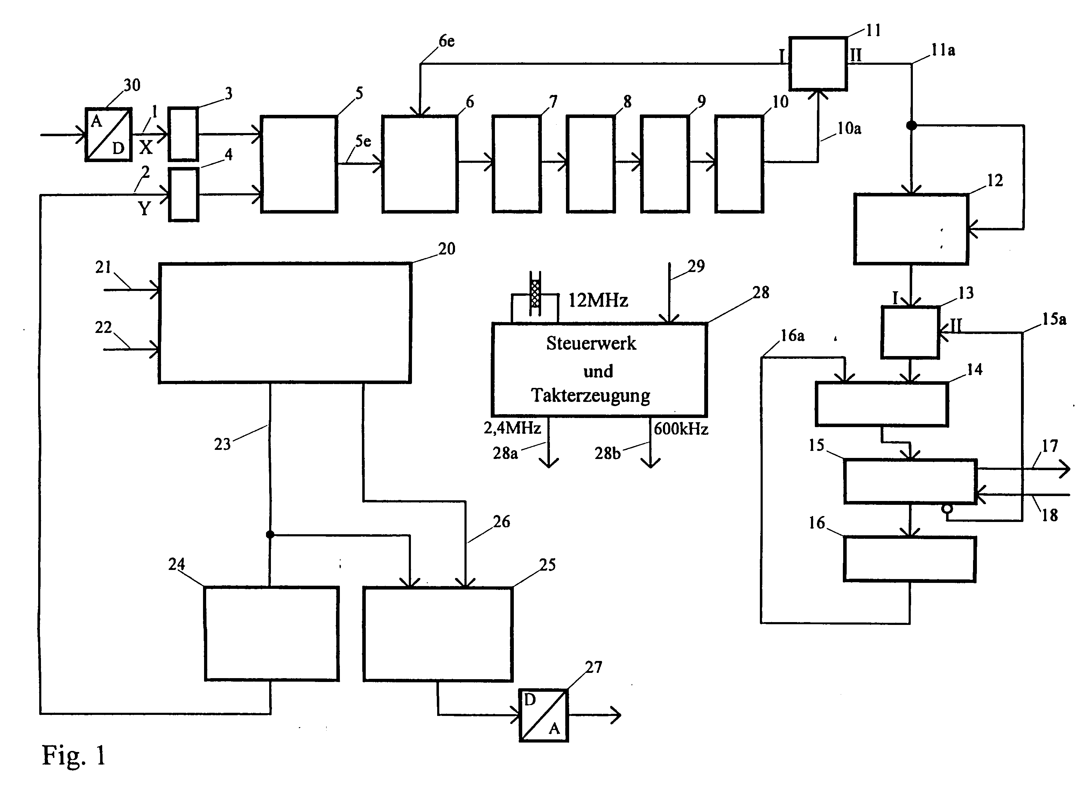

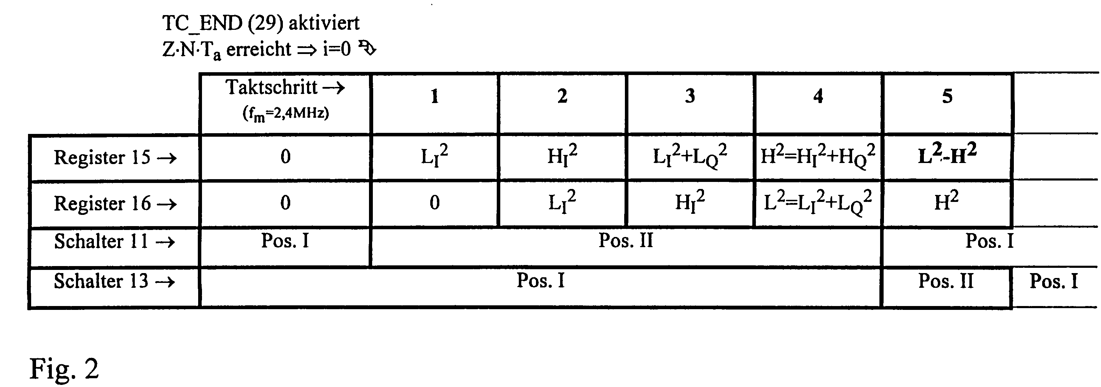

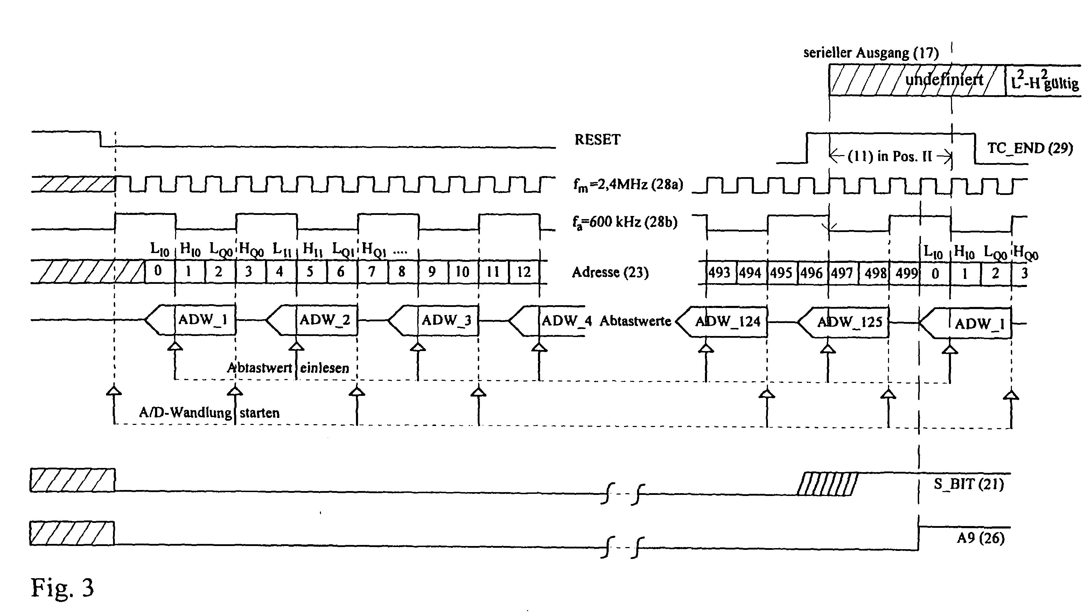

Anhand von **Fig. 1, Fig. 2** und **Fig. 3** wird eine Ausführungsform der Erfindung beschrieben, wobei **Fig. 1** das Gesamtkonzept beinhaltet und die **Fig. 2** und **3** zur näheren Erläuterung einzelner Abläufe dienen. Aus Gründen der Übersicht und Anschaulichkeit wird die Übertragung binärer Informationen (also ein Strom zufällig aufeinanderfolgender "H"- und "L"-Bits) mit fester Datenrate $r_D=1/T_B$ unter Einsatz von Frequenzumtastung mit zwei Signalformen der Dauer $T_c=T_B$ betrachtet. In einem inkohärenten Empfänger muß dann jeder Abtastwert X des Empfangssignals mit vier Referenzwerten Y nacheinander multipliziert werden. Die Erfindung ist selbstverständlich auch für M-äre Übertragung anwendbar; dabei muß jeder Abtastwert X des Empfangssignals mit 2M Referenzwerten Y multipliziert werden. Des weiteren können bei Bedarf auch nichtsinusförmige Signalformen großer Vielfalt eingesetzt werden. Zur Vorstellung des Grundgedankens wird zunächst die Funktion des Empfangszweiges vorgestellt, dann wird der Sendezweig erläutert.

Am Empfängereingang wird das Empfangssignal nach Verstärkung und Filterung mit der Abtastfrequenz $f_a=1/T_a$ abgetastet und in einem Analog/Digitalwandler **30** digitalisiert, vorzugsweise mit 8bit Auflösung. Das digitalisierte Empfangssignal wird im folgenden mit $X(iT_a)$ bezeichnet. Dabei ist $iT_a$ die diskrete Zeit, mit i=0,1,2... Zur korrelativen Verarbeitung wird das Empfangssignal X über die Leitung 1 mit dem Abtasttakt $f_a$ in ein Register **3** eingelesen. Über ein Leitungsbündel **2** werden Abtastwerte Y der Referenz aus einem Speicher **24** mit dem vierfachen Abtasttakt $4f_a = f_m$ in ein Register **4** eingelesen. Im Multiplizierer **5** wird jeder Empfangssignalabtastwert $X(iT_a)$ mit vier Referenzsignalabtastwerten $Y(iT_a+vT_a/4)$, mit v=0...3, digital multipliziert, und die vier Teilprodukte werden anschließend über die Signalformdauer $T_c$ - auch Chipdauer genannt - integriert, d.h. digital in separaten Akkumulatoren aufaddiert. Diese Akkumulatoren sind gemäß **Fig. 1** folgendermaßen vorteilhaft realisiert: Ein Addierer **6** ist mit vier auf ihn folgenden Registern **7, 8, 9, 10** und einem Schalter **11** zu einer Ringstruktur zusammenschaltbar. Zu Beginn des Empfangs einer Signalform ist der Schalter für die Dauer von 4 Takten der Frequenz $f_m$ in Position II, d.h. die Ringstruktur ist aufgetrennt, so daß über das Leitungsbündel **6e** Nullen an den einen Eingang des Addierers **6** gelangen, während der andere Eingang über das Leitungsbündel **5a** nacheinander vier Multiplikationsergebnisse $X(iT_a) \cdot Y(iT_a+vT_a/4)$ mit v=0...3 vom Multiplizierer **5** erhält. Dabei gilt folgende Zuordnung:

$$Y(iT_a+0 \cdot T_a/4) \equiv \text{Sinusabtastwert "L"-Bit} \qquad \text{(Inpasekomponente für "L"),}$$

$$Y(iT_a+1 \cdot T_a/4) \equiv \text{Sinusabtastwert "H"-Bit} \qquad \text{(Inpasekomponente für "H"),}$$

$$Y(iT_a + 2 \cdot T_a/4) \equiv \text{Cosinusabtastwert "L"-Bit} \qquad \text{(Quadraturkomponente für "L"),}$$

$$Y(iT_a + 3 \cdot T_a/4) \equiv \text{Cosinusabtastwert "H"-Bit} \qquad \text{(Quadraturkomponente für "H").}$$

Nach Ablauf von vier Takten der Frequenz $f_m$ stehen in den Registern **7, 8, 9, 10** folgende Ergebnisse

| Reg. 7 | Reg. 8 | Reg. 9 | Reg. 10 |
|--------|--------|--------|---------|
| $H_Q^0$ | $L_Q^0$ | $H_I^0$ | $L_I^0$ |
| (die hochgestellte "0" ist als Index und nicht als Potenz zu verstehen) | | | |

Wegen i=0 gilt am Beginn einer Signalform:

$$H_Q^0 = X(0) \cdot Y(0 + 3 \cdot T_a/4) + 0,$$

$$L_Q^0 = X(0) \cdot Y(0 + 2 \cdot T_a/4) + 0,$$

$$H_I^0 = X(0) \cdot Y(0 + 1 \cdot T_a/4) + 0,$$

$$L_I^0 = X(0) \cdot Y(0 + 0 \cdot T_a/4) + 0.$$

Die Addition von Null ergibt sich, weil die Ringstruktur durch den Schalter **11** aufgetrennt ist. Der Sinn der obigen Reihenfolge der Komponenten wird später bei der Betrachtung der Funktion der in den Blöcken **13, 14, 15** und **16** implementierten Entscheidungslogik klar. Dabei wird auch deutlich, was mit den aus Register **10** über die Leitungsbündel **10a** und **11a** an den Quadrierer **12** gelieferten Digitalwerten geschieht.

Zunächst wird die Funktion der Blöcke **6-11** weiter erklärt: Nach Ablauf der vier Takte der Frequenz $f_m$ wird der Schalter **11** in Position I gebracht, so daß eine Ringstruktur entsteht, in der die Inhalte des Registers **10** über die nunmehr verbundenen Leitungsbündel **10a** und **6e** an den Addierer **6** gelangen. Damit werden Rechenoperationen in Funktion gesetzt, die sich auf die Inhalte der Register **7, 8, 9** und **10** wie folgt auswirken:

$$\text{neu berechnetes Produkt} \qquad \text{bisher akummulierter Wert}$$

$$\text{Register } 7: \ H_Q^i = X(iT_a) \cdot Y\left(iT_a + \frac{3T_a}{4}\right) + \sum_{\xi=0}^{i-1} X(\xi T_a) \cdot Y\left(\xi T_a + 3 \cdot \frac{T_a}{4}\right)$$

$$\text{Register } 8: \ L_Q^i = X(iT_a) \cdot Y\left(iT_a + \frac{2T_a}{4}\right) + \sum_{\xi=0}^{i-1} X(\xi T_a) \cdot Y\left(\xi T_a + 2 \cdot \frac{T_a}{4}\right)$$

$$\text{Register } 9: \ H_I^i = X(iT_a) \cdot Y\left(iT_a + \frac{1T_a}{4}\right) + \sum_{\xi=0}^{i-1} X(\xi T_a) \cdot Y\left(\xi T_a + 1 \cdot \frac{T_a}{4}\right)$$

$$\text{Register } 10: \ L_I^i = X(iT_a) \cdot Y\left(iT_a + \frac{0T_a}{4}\right) + \sum_{\xi=0}^{i-1} X(\xi T_a) \cdot Y\left(\xi T_a + 0 \cdot \frac{T_a}{4}\right)$$

(das hochgestellte "i" ist hier ein Index und keine Potenz)

Unter der Voraussetzung, daß eine Signalform die Chipdauer $T_c = N.T_a$ hat, erhält man nach N Takten der Frequenz $f_a$, also nach 4N Takten der Frequenz $f_m$ die gewünschten vier Signalkomponenten in den Registern **7, 8, 9** und **10.**

| Reg. 7 | Reg. 8 | Reg. 9 | Reg. 10 |
|--------|--------|--------|---------|
| $H_Q$ | $L_Q$ | $H_I$ | $L_I$ |

Für die Entscheidung, ob ein "H" oder ein "L"-Bit gesendet wurde, sind jetzt die Signalkomponenten gemäß dem Quadraturempfängerprinzip wie folgt geometrisch zu addieren

$$H = \sqrt{H_I^2 + H_Q^2}; \ L = \sqrt{L_I^2 + L_Q^2}$$

und miteinander zu vergleichen. Ist der Zahlenwert H größer als L, so wird auf ein "H"-Bit entschieden, andernfalls auf ein "L"-Bit. Um im Empfänger zuverlässig den Beginn einer Datenübertragung erkennbar zu machen, ist in der Regel das Senden einer Präambel erforderlich. Bei der Präambeldetektion ist es problematisch, nur auf der Basis eines einfachen Größenvergleichs zu entscheiden. Durch den am Stromnetz ständig vorhandenen Störgeräuschpegel füllen sich die Register **7-10** stets bis zu einem gewissen Maß. Trotzdem muß der Empfänger dadurch nicht zwangsläufig irritiert werden, denn das Störgeräusch ist mit den nachrichtentragenden Signalformen im allgemeinen nicht korreliert und füllt somit alle Register in etwa gleich auf. Ein einfacher Größenvergleich von H und L für eine Präambelchipentscheidung wäre fehleranfällig, weil sich aus der stochastischen Natur der netzinhärenten Störgeräusche leichte statistische Schwankungen der Registerinhalte ergeben: Es ist deshalb sinnvoll, die Möglichkeit einer Bewertung der Detektionsqualität für jedes einzelne Präambelchip vorzusehen. Dazu muß neben dem reinen Größenvergleich eine Möglichkeit geschaffen werden, die Bewertung der Differenz L-H durchzuführen. Die genannten Aufgaben können auch mit den quadrierten Werten $H^2$ und $L^2$ ohne Nachteile durchgeführt werden. Darauf baut die im folgenden vorgestellte erfindungsgemäße Entscheidungsstruktur bestehend aus den Funktionsblöcken **12-16** in **Fig. 1** auf.

Zur Erläuterung wird angenommen, daß gerade eine Signalform der Dauer $T_c = NT_a$ komplett empfangen wurde. Dieser Zustand ist im übrigen stets nach $Z \cdot N \cdot T_a$ Abtasttakten bzw. $4 \cdot Z \cdot N \cdot T_a$ Multiplikationen erreicht (wobei **Z** eine positive ganze Zahl ist); der Laufindex i beginnt dann wieder bei Null. Jetzt wird der Schalter **11** für genau vier Takte der Frequenz $f_m = 4f_a$ in Position II gebracht - so wie bereits weiter oben für i=0 geschildert. Nunmehr ist das Leitungsbündel **10a** mit **IIa** verbunden und liefert in vier Taktschritten die Inhalte der Register **10, 9, 8** und **7** an den Quadrierer **12**. Der Quadrierer **12** ist vorzugsweise als Schaltnetz mit geringer Durchlaufzeit, die sehr viel kleiner als $1/f_m$ ist, nach dem aus Standard-Lehrbüchern über Computer Arithmetik bekannten *Dadda-Prinzip* realisiert. Über den Schalter **13,**

der sich in Position I befindet, wird das Quadrierergebnis an einen Addierer **14** geliefert, der den Inhalt des Registers **16** dazuaddiert und das Ergebnis in Register **15** ablegt. Das Leitungsbündel 16a schließt den Addierer **14** und die Register **15** und **16** zu einer Ringstruktur zusammen, in der die quadrierten Werte $H^2$ und $L^2$ in vorteilhafter Weise mit geringem Hardwareaufwand berechnet werden. Eine weitere Ringstruktur wird anschließend mit dem Leitungsbündel **15a** über den Schalter **13**, den Addierer **14** und das Register **15** aufgebaut, indem der Schalter **13** in Position II gebracht wird. Jetzt wird in einem weiteren Taktschritt auf elegante Weise die Differenz $L^2$-$H^2$ gebildet, die dann im Register **15** für eine serielle Ausgabe über Leitung **17** mit dem MSB zuerst zur Verfügung steht. Das MSB kann unmittelbar gelesen werden. Zum seriellen Auslesen der übrigen Stellen der Differenz $L^2$-$H^2$ ist ein Takt mit frei wählbarer Frequenz über Leitung **18** einzugeben. Die geschilderte Systemfünktion der Blöcke **12-16** wird anhand von **Fig. 2** verdeutlicht.

Der Sinn der Reihenfolge der Registerinhalte, nämlich $L_I \Rightarrow 10$, $H_I \Rightarrow 9$, $L_Q \Rightarrow 8$, und $H_Q \Rightarrow 7$, wird im folgenden deutlich: In den Registern **15** und **16** steht am Ende des Empfangs einer Signalform der Dauer $T_c$, d.h. bei Erreichen von $\mathbf{Z} \cdot N \cdot T_a$ bzw. i=0 jeweils der Wert Null. Schalter **11** kommt jetzt in Position II, während Schalter **13** in Position I verbleibt. Mit dem 1. Takt kommt $L_I{}^2$ über den Quadrierer **12** aus Register **10** an den Addierer **14**. Über das Leitungsbündel **16a** wird aus Register **16** Null dazuaddiert und das Ergebnis - nämlich $L_I{}^2$ - wird in Register **15** abgelegt. Mit dem 2. Takt kommt $H_I{}^2$ über den Quadrierer **12** aus Register **9** an den Addierer **14**, und wiederum wird über das Leitungsbündel **16a** aus Register **16** Null dazuaddiert und das Ergebnis - jetzt $H_I{}^2$ - wird in Register **15** abgelegt, während der vorige Inhalt $L_I{}^2$ ins Register **16** transferiert wird. Im 3. Taktschritt kommt $L_Q{}^2$ über den Quadrierer **12** aus Register **8** zusammen mit $L_I{}^2$ aus Register **16** an den Addierer **14**, so daß nunmehr die Summe $L_I{}^2+L_Q{}^2$ ins Register **15** gelangt, wobei der alte Inhalt $H_I{}^2$ ins Register **16** weitergeschoben wird. Der 4. Taktschritt bringt nun $H_Q{}^2$ über den Quadrierer **12** aus Register **7** zusammen mit $H_I{}^2$ an den Addierer **14**. Jetzt steht $H^2=H_I{}^2+H_Q{}^2$ in Register 15 und $L^2=L_I{}^2+L_Q{}^2$ in Register 16.

Während der beschriebenen 4 Taktschritte war der Schalter **11** in Position II und damit das Leitungsbündel **6e** vom Ausgang des Registers **10** getrennt, so daß dem Addierer **6** über **6e** Nullen zugeführt wurden. Über das Leitungsbündel **5a** wurden gleichzeitig in den vier Schritten die ersten Werte einer neuen Signalform der Dauer $T_c$ wie folgt in die Register **7-10** eingeschrieben:

$$\text{Register 7:} \qquad H_Q{}^0 = X(0) \cdot Y(0+3 \cdot T_a/4) + 0,$$

$$\text{Register 8:} \qquad L_Q{}^0 = X(0) \cdot Y(0+2 \cdot T_a/4) + 0,$$

$$\text{Register 9:} \qquad H_I{}^0 = X(0) \cdot Y(0+1 \cdot T_a/4) + 0,$$

$$\text{Register 10:} \qquad L_I{}^0 = X(0) \cdot Y(0+0 \cdot T_a/4) + 0.$$

(die hochgestellte "0" ist als Index und nicht als Potenz zu verstehen)

Jetzt wird der Schalter **11** wieder in Position I gebracht und die Akkumulation wie weiter oben beschrieben korrekt bis zum Ende der Signalform ausgeführt.

Zur Ermittlung der Differenz $L^2$-$H^2$ wird der Schalter **13** für die Dauer eines 5. Taktschritts in Position II gebracht, so daß das Leitungsbündel **15a** mit dem einen Eingang des Addierers **14** verbunden ist, während am zweiten Eingang der Inhalt von Register **16,** nämlich $L^2$, anliegt. Das Leitungsbündel **15a** ist an den negierten Ausgängen des Registers **15** angeschlossen, so daß das Einerkomplement des Inhaltes von Register **15**, das -$H^2$ entspricht, an den Addierer **14** kommt. Somit wird dort die Differenz $L^2$-$H^2$ berechnet und mit Ablauf des 5. Taktschrittes in Register **15** eingeschrieben. Wegen der Einerkomplementdarstellung repräsentiert das an Leitung **17** verfügbare Signal unmittelbar das empfangene Datenbit, denn für $H^2>L^2$ ist die berechnete Differenz negativ und damit das MSB=1.

Bei der Präambeldetektion ist eine intelligente Bewertung der Differenz $L^2$-$H^2$ von großem Vorteil. Dazu kann z.B. ein Mikrocontroller die Information $L^2$-$H^2$ seriell lesen und per Software mit einer frei wählbaren Schwelle vergleichen. Diese Schwelle wird als Prozentsatz des maximal möglichen Wertes $L^2$ oder $H^2$ gewählt, der sich bei ungestörtem Empfang und bei optimaler Aussteuerung des A/D-Wandlers im Empfänger ergeben würde. In der Praxis wird dieser Prozentsatz etwa zwischen 2% und 10% liegen. Der günstigste Wert hängt von der jeweiligen Störumgebung ab. Es ist deshalb vorteilhaft, ihn adaptiv, z.B. abhängig von der empfangenen Störleistung einzustellen. Das kann durch Beobachtung der Differenz $L^2$-$H^2$ in Sendepausen geschehen. Wenn relativ wenig Störgeräusch vorhanden ist, wird die Differenz $L^2$-$H^2$ klein sein und wenig streuen. Dann wird man die Schwelle in der Gegend von 2% wählen. Mit wachsender störbedingter Differenz $L^2$-$H^2$ wird die Schwelle in Richtung 10% verschoben. Schwellenwerte über 10% haben sich in der Praxis als wenig sinnvoll erwiesen. Der Beginn einer Informationsübertragung läßt sich so in den unterschiedlichsten Störszenarien mit der erfindungsgemäßen Einrichtung auf einfache Weise und mit hoher Sicherheit vom stets vorhandenen Störgeräusch an einem Stromnetz unterscheiden. Dadurch sind Irritationen (Fehlalarme) des Empfängers auch bei beträchtlichem Störpegel auszuschließen und gesendete Daten können fehlerfrei empfangen werden.

Für die zuverlässige und störresistente Synchronisation beim Empfangen und Senden läßt sich, wie weiter oben erwähnt, die Netzwechselspannung vorteilhaft als globales Referenzsignal verwenden. Um Mehrdeutigkeiten in einem Drehstromnetz auszuschließen, ist es vorteilhaft, den Beginn einer Datenübertragung an einen Nulldurchgang der Netzspannung zu koppeln. Bei Drehstrom ergibt sich dann ein Zeitraster von ca. 3,3ms. Dieses Zeitraster würde einer Datenrate von 300bit/s entsprechen. Das bedeutet keineswegs, daß andere Datenraten ausgeschlossen sind. Wird z.B. die Datenrate $r_D$=1200bit/s gewünscht, dann ist das Basisraster von 3,3ms in vier gleiche Teile zu je 833,3µs zu unterteilen. Dazu ist lediglich die Umprogrammierung eines Timers notwendig, der in einem als Steuereinheit eingesetzten Mikrocontroller integriert ist. Ein typischer Senderahmen besteht beispielsweise aus einem Präambel- und aus einem Datenfeld, die sich beide in das aus der Netzwechselspannung abgeleitete Zeitraster einfügen. Dabei ist es vorteilhaft, für die Präambel eine hohe Detektionssicherheit vorzusehen, weil ein Entdeckungsverlust der Präambel oder ein Falschalarm zu einer großen Menge verlorener Daten führt. Denn typische Datenfeldlängen für sinnvolle technische Anwendungen sind 100bit und mehr. Die im allgemeinen sehr komplexe Aufgabe, eine hohe Entdeckungssicherheit für die Präambel bei gleichzeitig geringer Falschalarmwahrscheinlichkeit zu erzielen, ist mit der vorliegenden Erfindung - wie oben beschrieben - elegant und zuverlässig lösbar.

Im folgenden wird nun anhand von **Fig. 1** und des Timing-Schemas in **Fig. 3** die Funktionsweise der Signalsyntheseeinrichtungen zur Generierung der Referenzsignale Y und der Sendesignalformen beschrieben. Wie eingangs erwähnt, ist es Aufgabe der vorliegenden Erfindung, Vollduplex-Datenübertragung mit phasenkontinuierlichen Signalformen zu bewerkstelligen. Dazu dienen die Funktionsblöcke **20, 24, 25** und **28.** Die Referenzsignale Y sind in einem digitalen Speicher **24** in Form eines ROM, PROM, EPROM, EEPROM oder RAM abgelegt, der von einem speziellen Adreßzähler **20** über das Leitungsbündel **23** adressiert wird, wobei sich alle Referenzwerte Y in Adreßbereichen gleicher Länge, entsprechend einem festen Zählerzyklus, befinden.

Für den Sendebetrieb werden die gleichen Adressen über das Leitungsbündel **23** einem zweiten digitalen Speicher **25** in Form eines ROM, PROM, EPROM, EEPROM oder RAM zugeführt, der die Abtastwerte der Sendesignalformen enthält. Zur Unterscheidung von H- und L-Bit beim Sendevorgang dient die Adreßleitung **26**. Der D/A-Wandler **27** liefert das analoge Sendesignal, das z.B. nach Tiefpaßfilterung und geeigneter Verstärkung ins Stromnetz eingekoppelt werden kann. Das zu sendende Datenbit wird dem Funktionsblock **20** über die Leitung **21** zugeführt. Ein Leitungsbündel **22** dessen genaue Funktionsweise weiter unten anhand eines Ausführungsbeispiels der Erfindung erklärt wird, dient zur Auswahl verschiedener Datenraten.

Selbstverständlich ist auch Halbduplexbetrieb mit wechselseitigem Senden und Empfangen möglich. In diesem Fall ist nur ein Abtastwertespeicher nötig, der sowohl die Referenzabtastwerte als auch die Sendesignalabtastwerte enthält, wobei dann eine weitere, von außen z.B. über einen Mikrocontroller bediente Adreßleitung, für die Unterscheidung der Speicherbereiche von Referenzund Sendesignalabtastwerten sorgt.

Der Funktionsblock **28** beinhaltet das Steuerwerk und die Takterzeugung für das Vollduplex-Datenübertragungssystem. Bei der beschriebenen Ausführungsform der Erfindung wird von einem Haupttakt von 12MHz ausgegangen, aus dem durch Teilen durch 20 ein Abtasttakt der Frequenz $f_a$=600kHz über Leitung **28b** und durch Teilen durch 5 der dazu passende Multiplikationstakt mit $f_m$=2,4MHz über Leitung **28a** zur Verfügung gestellt wird. Die Leitung **29** dient dazu, dem Steuerwerk das Erreichen des Endes einer Signalformdauer $T_c$ beim Empfang zu signalisieren; sie erhält für die folgenden Erläuterungen den Namen **TC_END**. Das Aktivieren von **TC_END** leitet die oben beschriebene geometrische Addition und Differenzbildung zur Datenbitgewinnung bzw. Präambeldetektion ein. $T_c$ kann je nach gewählter Datenrate und Präambelchipdauer, wie im weiteren an einem Ausführungsbeispiel der Erfindung gezeigt wird, unterschiedliche Werte annehmen. Hierin ist eine Besonderheit der vorliegenden Erfindung zu sehen, denn Modifikationen der wichtigsten Systemparameter wie Datenrate, Signalform- und Frequenzwahl sind ohne Hardwareänderungen durchführbar; lediglich die Inhalte der Abtastwertespeicher und das Programm für einen Mikrocontroller, der einfache, langsame Steuer- und Datentransferaufgaben auszuführen hat, sind zu ändern.

Das Timing-Diagramm nach **Fig. 3** beschreibt das zeitliche Verhalten einer Ausführungsform des Vollduplex-Datenübertragungssystems nach **Fig. 1**. In diesem Beispiel ist ein Abtasttakt von $f_a$=600kHz für das Empfangssignal zugrunde gelegt. Daraus ergibt sich der Multiplikationstakt $f_m$=2,4MHz. Für die Sendefrequenzen und die implementierten Datenraten sei folgende Wahl getroffen:

L-Bit-Sendefrequenz:      $f_L$=100800Hz
H-Bit-Sendefrequenz:      $f_H$=105600Hz

| Datenrate: | Signalformdauer | Perioden in $T_c$ |
|---|---|---|
| $r_{D1}$=300bit/s | $T_{c1}$=3,33ms | $f_L$: 336; $f_H$: 352 |
| $r_{D2}$=600bit/s | $T_{c2}$=1,66ms | $f_L$: 168; $f_H$: 176 |
| $r_{D3}$=1200bit/s | $T_{c3}$=833,3µs | $f_L$: 84; $f_H$: 88 |
| $r_{D4}$=2400bit/s | $T_{c4}$=416,6µs | $f_L$: 42, $f_H$: 44 |

Es handelt sich - wie leicht nachzurechnen ist - um einen orthogonalen Frequenzsatz, wobei in jede Signalformdauer $T_c$ jeweils eine ganze Anzahl von Perioden der Sendefrequenzen paßt. Bei 600kHz Abtastrate werden für eine fehlerfreie Darstellung von $f_L$=100800Hz und $f_H$=105600Hz jeweils genau 125 Abtastwerte benötigt. Wegen des inkohärenten Empfangs werden pro Abtastwert X bekanntlich vier Referenzwerte Y benötigt, so daß sich im Funktionsblock **20** eine Zählerlänge von 500 ergibt. Das Leitungsbündel **23** zur Referenzspeicheradressierung muß demnach 9 Leitungen umfassen, wobei der Adreßbereich 0...499 zyklisch mit der Taktfrequenz $f_m$ = 2,4MHz zu durchlaufen ist. Die beschriebenen Festlegungen stellen in der Praxis keine Einschränkung für die Nutzung des gemäß EN 50 065-1 verfügbaren Frequenzbandes dar. Das verdeutlicht folgende Tabelle 1 mit einer Auswahl von 30 Frequenzen aus dem Bereich 9,6kHz... 148,8kHz.

Tabelle 1:

| Beispiel eines orthogonalen Frequenzsatzes mit 30 Frequenzen | | |
|---|---|---|
| Nummer | Frequenz in Hz | Zahl der Werte |
| 0 | 9600 | 125 |
| 1 | 14400 | 125 |
| 2 | 19200 | 125 |
| 3 | 24000 | 25 |
| 4 | 28800 | 125 |
| 5 | 33600 | 125 |
| 6 | 38400 | 125 |
| 7 | 43200 | 125 |
| 8 | 48000 | 25 |
| 9 | 52800 | 125 |
| 10 | 57600 | 125 |
| 11 | 62400 | 125 |
| 12 | 67200 | 125 |
| 13 | 72000 | 25 |
| 14 | 76800 | 125 |
| 15 | 81600 | 125 |
| 16 | 86400 | 125 |
| 17 | 91200 | 125 |
| 18 | 96000 | 25 |
| 19 | 100800 | 125 |
| 20 | 105600 | 125 |
| 21 | 110400 | 125 |
| 22 | 115200 | 125 |
| 23 | 120000 | 5 |
| 24 | 124800 | 125 |
| 25 | 129600 | 125 |
| 26 | 134400 | 125 |
| 27 | 139200 | 125 |
| 28 | 144000 | 25 |
| 29 | 148800 | 125 |

Mit Hilfe des Timing-Diagramms in **Fig. 3** wird nun beispielhaft der Sinn obiger Festlegungen schrittweise erklärt. Nachdem **RESET** inaktiv wird, starten die beiden Takte $f_a$=600kHz und $f_m$=2,4MHz gleichzeitig mit einer Vorderflanke. Jede Vorderflanke von $f_a$ löst einen Wandelzyklus des A/D-Wandlers **30** aus, und zum Zeitpunkt einer Rückflanke von $f_a$ steht ein gültiger digitaler Abtastwert X am Leitungsbündel 1 zum Einlesen ins Register **3** bereit. Mit der zweiten Vorderflanke von $f_m$ beginnt der zyklische Zähler im Funktionsblock **20** bei Null und zählt mit jeder weiteren Vorderflanke aufwärts. Wie man in **Fig. 3** erkennt, wird zu jedem Abtastwert $X(iT_a)$ ein passender Satz von vier Referenzwerten, nämlich

$$L_{Ii}: Y(iT_a+0 \cdot T_m) \equiv \text{Sinusabtastwert "L"-Bit} \qquad \text{(Inpasekomponente für "L"),}$$

$$H_{Ii}: Y(iT_a+1 \cdot T_m) \equiv \text{Sinusabtastwert "H"-Bit} \qquad \text{(Inpasekomponente für "H"),}$$

$$L_{Qi}: Y(iT_a+2 \cdot T_m) \equiv \text{Cosinusabtastwert "L"-Bit} \qquad \text{(Quadraturkomponente für "L"),}$$

$$H_{Qi}: Y(iT_a+3 \cdot T_m) \equiv \text{Cosinusabtastwert "H"-Bit} \qquad \text{(Quadraturkomponente für "H"),}$$

mit i=0...N-1 aus dem Referenzspeicher **24** am Leitungsbündel **2** bereitgestellt und jeweils zeitrichtig mit $f_m$=1/$T_m$ ins Register **2** eingelesen. Der Zähler im Block **20** beginnt nach Erreichen des Standes 499 wieder bei Null. Wann das Ende einer Signalform erreicht ist, wird durch die gewählte Datenrate bestimmt. Für die oben aufgeführten Datenraten erhält man folgende Zyklenzahlen des Zählers:

Tabelle 2:

| Zuordnung von Datenraten, Zyklenzahlen und Auswahlleitungspegeln | | |
|---|---|---|
| Datenrate: | Zyklenzahl | Auswahlleitungen 22 |
| $r_{D1}$=300bit/s | 16 | 11 |
| $r_{D2}$=600bit/s | 8 | 10 |
| $r_{D3}$=1200bit/s | 4 | 01 |
| $r_{D4}$=2400bit/s | 2 | 00 |

Für den Empfangsbetrieb ist der Pegel an den Auswahlleitungen **22** nicht relevant, denn das Ende einer Signalformdauer wird durch Aktivieren des Signals **TC_END**, z.B. durch einen Mikrocontroller, dem Steuerwerk **28** über Leitung **29** signalisiert. **TC_END** sollte wie in **Fig. 3** gezeigt etwas länger als eine Periode des Taktes $f_a$ anstehen. **TC_END** wird mit einer Rückflanke von $f_a$ registriert. Das ist - wie weiter oben beschrieben - exakt der richtige Zeitpunkt für das Steuerwerk, den Schalter **11** in Position II zu bringen und damit die Ringstruktur aus dem Addierer **6** und den Registern **7-10** aufzutrennen. Wie weiter oben geschildert, beginnt jetzt die Auswertung bis hin zur Bitentscheidung für die gerade empfangene Signalform, während gleichzeitig der erste Abtastwert einer neuen zu empfangenden Signalform bereits ansteht und verarbeitet wird. Das Ergebnis $L^2$-$H^2$ ist wenige Mikrosekunden nach Wegnahme des **TC_END**-Signals gültig und kann aus Register **15** gelesen werden. Es ist keineswegs erforderlich, daß beim Auftreten von **TC_END** der zyklische Zähler gerade einen Zyklus beendet. Weil **TC_END** stets mit einer Vorderflanke von $f_a$ registriert wird, ist gewährleistet, daß der letzte Abtastwert einer Signalform immer mit allen vier Referenzwerten multipliziert wurde, und daß der erste Abtastwert einer neuen Signalform korrekt mit der Abtastwertefolge $L_{I0}$, $H_{I0}$, $L_{Q0}$, $H_{Q0}$ multipliziert wird. Da inkohärenter Empfang vorliegt, und entsprechend **Fig. 1** eine phasenunempfindliche Quadraturempfängerstruktur realisiert ist, spielt auch die Phasenlage der Referenz keine Rolle.

Neben dem beschriebenen Empfangs-Timing enthält **Fig. 3** auch den zeitlichen Ablauf beim Senden. Hier ist besonders hervorzuheben, daß Phasenkontinuität gewährleistet ist, d.h. beim Wechsel von $f_L$ zu $f_H$ und umgekehrt kommt es zu keinem Phasensprung - es liegt CPFSK-Modulation vor. Die strengen Vorschriften bezüglich der Außerbandstörleistung nach EN 50 065-1 sind mit FSK oder FH ohne Phasenkontinuität nicht einzuhalten. Die Aufgabe, Phasenkontinuität an den Chip- bzw. Bitgrenzen zu garantieren, wird erfindungsgemäß unter Zuhilfenahme des programmierbaren zyklischen Zählers im Funktionsblock **20** dadurch gelöst, daß ein von einem Chip- bzw. Bitwechsel auszulösender Frequenzwechsel stets mit dem Abschluß eines Zählerzyklusses zusammenfällt. D.h. ein Frequenzwechsel wird synchron mit einer Vorderflanke des Taktes $f_m$ vorgenommen, die den programmierbaren zyklischen Zähler vom Stand 499 auf Null setzt. Bei einer gewählten Datenrate $r_D$=1200bit/s erfolgen also während einer Bitdauer genau vier Durchläufe des programmierbaren zyklischen Zählers im Funktionsblock **20**. Die Auswahlleitungen **22**, die die Datenrate festlegen, bestimmen die Anzahl der Zählerzyklen gemäß Tabelle 2. Es ist sinnvoll, eine Datenratenumschaltung nur in Verbindung mit **RESET** zu erlauben. Das zu sendende Bit **S_BIT**- siehe **Fig. 3** - kann zu einem beliebigen Zeitpunkt an die Leitung **21** zu Funktionsblock **20** gegeben werden; es wird immer nur nach Ablauf der durch die Datenratenwahl festgelegten Zahl von Zählerzyklen berücksichtigt und veranlaßt dann gegebenenfalls eine mit einer Vorderflanke von $f_m$ synchronisierte Pegeländerung an der Leitung **26** zum Speicher **25**, der die Sendesignalabtastwerte enthält. In **Fig. 3** ist die erfindungsgemäße Umsetzung der Grundidee an einem Beispiel verdeutlicht. Nach Wegnahme von **RESET** sei **S_BIT** (Leitung **21**) auf L-Pegel. Zu irgendeinem Zeitpunkt wird **S_BIT** auf H-Pegel gesetzt. Beim darauffolgenden Zählerüberlauf von 499 nach Null wird jetzt die Adresse A9 (Leitung **26**) des Speichers **25** synchron mit dem Takt $f_m$ auf H-Pegel gesetzt, und der erste Abtastwert der H-Bit-Signalform wird adressiert. Da in einem Zählzyklus der Länge 500 immer eine ganze Anzahl von Perioden einer Sendesignalform abgelegt ist, kann die Phasenkontinuität nunmehr auf einfache Weise dadurch gewährleistet werden, daß z.B. unter der Adresse Null immer auch ein dem Signalwert Null entsprechender Abtastwert abgelegt ist. Auf die Darstellung der gemäß gewählter Datenrate zu durchlaufenden Zählerzyklen wurde in **Fig. 3** aus Gründen der Übersichtlichkeit verzichtet. Die Zeitlücke zwischen der linken und der rechten Bildhälfte symbolisiert, daß hier je nach Datenrate eine bestimmte Anzahl von Zählerzyklen ablaufen. Die gleichzeitige Verwendung des zyklischen Zählers in Funktionsblock **20** für Empfangen und Senden erlaubt also auf elegante Weise die erfindungsgemäße Vollduplex-Datenübertragung. Obwohl beim Senden eine Taktrate von 600kHz - entsprechend dem empfängerseitigen Abtasttakt $f_a$ - bereits mehr als ausreichend wäre, um das Abtasttheorem zu erfüllen, ist es keineswegs nachteilig, die Sendesignalsynthese mit dem vierfachen Abtasttakt, nämlich $f_m$=2,4MHz vorzunehmen - wie es in dem beschriebenen Ausführungsbeispiel der Erfindung geschieht. Denn der Sendesignalspeicher **25** muß hierbei noch nicht einmal die Größe 1 Kilobyte haben. Wegen der hohen Überabtastung (mehr als 10-fach) ergeben sich wesentlich reduzierte Anforderungen an den Signalrekonstruktionstiefpaß, die zu signifikanter Kosteneinsparung führen.

**Patentansprüche**

**1.** Verfahren zur digitalen Signalsynthese und -verarbeitung in einem Vollduplex-Datenübertragungssystem zur Übertragung digitaler Informationen über Stromversorgungsnetze mittels schmalbandiger oder bandspreizender Modulation, wobei

zum inkohärenten Korrelationsempfang ein aus dem Stromnetz ausgekoppeltes, verstärktes und gefiltertes Empfangssignal (X) nach Analog/Digitalwandlung und Multiplikation mit jeweils vier digitalen Referenzsignalen (Y) aus einem von einem programmierbaren zyklischen Adreßzähler fester Basislänge **(20)** adressierten Abtastwertespeicher in einer Ringstruktur aus einem ersten Addierer und vier Registern so akkumuliert wird, daß nach Ablauf einer Signalformdauer in dem ersten und zweiten Register (**9** und **10**) die Inphasekomponenten von H- und L-Bit und in dem dritten und vierten Register (**7** und **8**) die Quadraturkomponenten von H- und L-Bit stehen, dadurch gekennzeichnet, daß anschließend in vier Taktschritten diese Werte quadriert und einer Entscheidungseinrichtung zugeführt werden, die zunächst in vier Taktschritten mittels eine zweiten Addierers **(14)** und fünften und sechsten Registern (**15** und **16**) die der jeweiligen Signalformenergie eines L- bzw. eines H-Bits entsprechenden Werte $L^2$ und $H^2$ berechnet und in einem weiteren Taktschritt die für die Bitentscheidung relevante Differenz $L^2$-$H^2$ zur seriellen Ausgabe ermittelt, und daß der programmierbare zyklische Adreßzähler **(20)** gleichzeitig zwecks Sendesignalsynthese einen mit Sendesignalabtastwerten gefüllten Speicher adressiert, dessen Ausgangssignale nach Digital/Analogwandlung, Tiefpaßfilterung und Verstärkung ins Stromnetz eingekoppelt werden, wobei jeder Wechsel beim zu sendenden Datenbit stets synchron mit dem Ablauf eines Adreßzählerzyklusses erfolgt, so daß ein phasenkontinuierliches Sendesignal entsteht.

**2.** Verfahren nach Anspruch 1,
   **dadurch gekennzeichnet daß**
   für die Systemsteuerung und den Datentransfer ein Mikroprozessor, ein Mikrocontroller oder eine Digitalschaltung vergleichbarer Funktion eingesetzt ist, die beim Sendevorgang dem programmierbaren zyklischen Adreßzähler **(20)** das zu sendende Datenbit zuführt, wobei die gewünschte Datenrate einstellbar ist, und die beim Empfangen das Ende einer Signalformdauer dem Steuerwerk **(28)** signalisiert, wobei synchronisiert mit dem Abtasttakt des Empfangssignals genau für eine Periode dieses Taktes die Auswertung der in dem ersten, zweiten, dritten und vierten Register **(7-10)** akkumulierten Werte eingeleitet wird.

**3.** Verfahren nach Anspruch 1 oder 2,
   **dadurch gekennzeichnet daß**
   durch Verwendung nur eines Abtastwertespeichers ein Halbduplex-Datenübertragungssystem für CPFSK-Modulation entsteht, wobei dieser Speicher nunmehr sowohl die Refenzsignalabtastwerte als auch die Sendesignalabtastwerte in verschiedenen Adreßbereichen enthält, und wobei die Unterscheidung der Adressierung beim Senden und Empfangen über eine separate Adreßleitung erfolgt, die mit einem zur Systemsteuerung eingesetzten Mikroprozessor, Mikrocontroller oder einer Digitalschaltung vergleichbarer Funktion verbunden ist.

4. Verfahren nach Anspruch 1, 2 oder 3,
   **dadurch gekennzeichnet daß**
   zur Synchronisation der Signalsynthese beim Senden und Empfangen und für die Synchronisation der gesamten Empfangssignalverarbeitung die Netzwechselspannung als globales Referenzsignal verwendet wird, wobei der Beginn einer Datenübertragung immer an einen Nulldurchgang der Netzspannung gekoppelt ist, und wobei sich am Drehstromnetz ein Basiszeitraster von 1/6 Netzperiode ergibt, das vorteilhaft zur Festlegung der Präambelchipdauer verwendet werden kann, und aus dem durch ganzzahlige Teilung die Zeitbasen für verschiedene Datenraten, wie z.B. 300, 600, 1200, 2400bit/s im europäischen 50Hz-Netz, gewonnen werden können.

5. Vollduplex-Datenübertragungssystem mit einer Einrichtung zur digitalen Signalsynthese und -verarbeitung zur Übertragung digitaler Informationen über Stromversorgungsnetze mittels schmalbandiger oder bandspreizender Modulation, wobei das System so eingerichtet ist, daß
   beim Empfang ein aus dem Stromnetz ausgekoppeltes verstärktes und gefiltertes Empfangssignal (X) nach Analog/Digitalwandlung an einen digitalen Multiplizierer **(5)** gelangt, dessen zweiter Eingang ein Referenzsignal (Y) aus einem von einem programmierbaren zyklischen Adreßzähler fester Basislänge **(20)** adressierten Abtastwertespeicher **(24)** erhält, wobei jedem Empfangswert genau vier Referenzwerte (Y)- entsprechend den Inphase- und Quadraturabtastwerten von jeweils L- und H-Bit-Signalform - zugeordnet sind, die entstehenden Produkte in einer Ringstruktur aus einem ersten Addierer **(6)**, vier Registern **(7, 8, 9 und 10)** und einem ersten Schalter **(11)** akkumuliert werden, so daß nach Ablauf einer Signalformdauer in dem ersten und zweiten Register **(9 und 10)** die Inphasekomponenten von H- und L-Bit und in dem dritten und vierten Register **(7 und 8)** die Quadraturkomponenten von H- und L-Bit akkumuliert sind, dadurch gekennzeichnet, daß anschließend der Schalter **(11)**, unter Auftrennung der Ringstruktur aus dem Addierer **(6)** und dem Registersatz **(7-10)**, die vier Ergebnisse aus den Registern **(7-10)** über einen Quadrierer **(12)** einer Entscheidungseinrichtung, bestehend aus einem zweiten Schalter (13), einem zweiten Addierer **(14)**, funften und sechsten Register **(15** und **16)**, zuführt, wobei zunächst in vier Taktschritten mittels des zweiten Addierers **(14)** in dem funften und sechsten Register **(15** und **16)** die der jeweiligen Signalformenergie eines H- bzw. eines L-Bits entsprechenden Werte $L^2$ und $H^2$ berechnet werden, und wobei in einem weiteren Taktschritt, in dem sich der zweite Schalter **(13)** in Position II befindet, die für die Bitentscheidung relevante Differenz $L^2$-$H^2$ zur seriellen Ausgabe ermittelt wird, und daß der programmierbare zyklische Adreßzähler **(20)** zwecks Sendesignalsynthese gleichzeitig einen mit Sendesignalabtastwerten gefüllten Speicher **(25)** adressiert, dessen Ausgangssignale nach Digital/Analogwandlung, Tiefpaßfilterung und Verstärkung ins Stromnetz eingekoppelt werden, wobei die Auswahl der Abtastwerte des zu sendenden Datenbits - H oder L - synchron mit dem Ablauf eines Adreßzählerzyklusses mittels einer zusätzlichen Adreßleitung **(26)** zum Speicher **(25)** vorgenommen wird, so daß sich ein phasenkontinuierliches Sendesignal ergibt.

6. Einrichtung nach Anspruch 5,
   **dadurch gekennzeichnet daß**
   für den Sendevorgang dem programmierbaren zyklischen Adreßzähler **(20)** das zu sendende Datenbit über eine Leitung **(21)** von einem zur Systemsteuerung eingesetzten Mikroprozessor, Mikrocontroller oder einer Digitalschaltung vergleichbarer Funktion, zugeführt wird, wobei über ein Leitungsbündel **(22)** die gewünschte Datenrate einstellbar ist, und daß beim Empfangen das Ende einer Signalformdauer dem Steuerwerk **(28)** von dem zur Systemsteuerung eingesetzten Mikroprozessor, Mikrocontroller oder der Digitalschaltung vergleichbarer Funktion signalisiert wird, und daß dann, synchronisiert mit dem Abtasttakt des Empfangssignals, der erste Schalter **(11)** für eine Periode dieses Taktes in Position II gebracht wird, um die Auswertung der in dem ersten, zweiten, dritten und vierten Register **(7-10)** akkumulierten Werte durchzuführen, so daß schließlich im fünften Register **(15)** das gesuchte Ergebnis $L^2$-$H^2$ enthalten ist, das seriell über eine Leitung **(17)** von dem zur Systemsteuerung eingesetzten Mikroprozessor, Mikrocontroller oder einer Digitalschaltung vergleichbarer Funktion mittels eines beliebigen Taktes, der über eine Leitung **(18)** einzugeben ist, ausgelesen werden kann, wobei das erste ohne Auslesetakt an Leitung **(17)** anstehende Bit unmittelbar dem gerade empfangenen Datenbit entspricht.

7. Einrichtung nach Anspruch 5 oder Anspruch 6
   **dadurch gekennzeichnet daß**
   der Beginn einer Datenübertragung mittels einer Präambel signalisiert wird, bei deren Detektion eine intelligente Bewertung der Differenz $L^2$-$H^2$ erfolgt, indem ein zur Systemsteuerung eingesetzter Mikroprozessor, Mikrocontroller oder Digitalschaltung vergleichbarer Funktion die Differenz $L^2$-$H^2$ seriell über eine Leitung **(17)** aus dem funften Register **(15)** liest und per Software mit einer frei wählbaren Schwelle vergleicht, wobei diese Schwelle als Prozentsatz des maximal möglichen Wertes $L^2$ oder $H^2$ gewählt ist, und wobei die Schwelle adaptiv, abhängig von empfangener Stör- und/oder Nutzsignalenergie eingestellt werden kann, um die Entdeckungswahrscheinlichkeit einer Präambel bei gleichzeitig möglichst geringer Falschalarmwahrscheinlichkeit zu optimieren.

8. Einrichtung nach einem oder mehreren der Ansprüche 5 bis 7,
   **dadurch gekennzeichnet daß**
   durch Verwendung nur eines Abtastwertespeichers anstelle der beiden Speicher **(24** und **25)** ein Halbduplex-Datenübertragungssystem für CPFSK-Modulation entsteht, wobei der Speicher nunmehr sowohl die Refenzsignalabtastwerte als auch die Sendesignalabtastwerte in verschiedenen Adreßbereichen enthält, und wobei die Unterscheidung der Adressierung beim Senden und Empfangen über eine Adreßleitung erfolgt, die nicht mit dem programmierbaren zyklischen Adreßzähler **(20)**, sondern mit einem zur Systemsteuerung eingesetzten Mikroprozessor, Mikrocontroller oder einer Digitalschaltung vergleichbarer Funktion verbunden ist.

9. Einrichtung nach einem oder mehreren der Ansprüche 5 bis 8,
   **dadurch gekennzeichnet daß**
   zur Synchronisation der Signalsynthesizer für Senden und Empfangen und für die Synchronisation der Empfangssignalverarbeitung die Netzwechselspannung als globales Referenzsignal verwendet wird, indem die Nulldurchgänge der Netzwechselspannung z.B. an einen Interrupt-Eingang eines zur Systemsteuerung eingesetzten Mikroprozessors, Mikrocontrollers oder einer Digitalschaltung vergleichbarer Funktion signalisiert werden, die mittels interner Timer geeignete Unterteilungen des Nulldurchgangszeitrasters vornimmt, wobei der Beginn einer Datenübertragung immer an einen Nulldurchgang der Netzspannung gekoppelt ist, und wobei sich am Drehstromnetz ein Basiszeitraster von 1/6 Netzperiode ergibt, das vorteilhaft zur Festlegung der Präambelchipdauer verwendet werden kann, und aus dem durch weitere ganzzahlige Teilung vorteilhaft die Zeitbasen für verschiedene Datenraten - wie z.B. 300, 600, 1200, 2400bit/s im europäischen 50Hz-Netz - gewonnen werden können.

10. Einrichtung nach einem oder mehreren der Ansprüche 5 bis 9,
    **dadurch gekennzeichnet daß**
    die Funktionsgruppen mit Ausnahme des Analog/Digitalwandlers **(30)**, der Abtastwertespeicher **(24** und **25)** und des Digital/Analogwandlers **(27)** in einer rein digitalen anwendungsspezifischen integrierten Schaltung untergebracht sind.

11. Einrichtung nach einem oder mehreren der Ansprüche 5 bis 10,
    **dadurch gekennzeichnet daß**
    alle Funktionsgruppen in einer gemischt analog/digitalen anwendungsspezifischen integrierten Schaltung, z.B. einer Standardzellen- oder Vollkundenschaltung, untergebracht sind, wobei die Speicher **(24** und **25)** vorzugsweise als RAM-Zellen ausgeführt sind, deren Inhalt nach einem Schaltungsreset über einen äußeren Festwertspeicher, z.B. in Form eines PROMs oder EPROMs geladen wird.

12. Einrichtung nach einem oder mehreren der Ansprüche 5 bis 11,
    **dadurch gekennzeichnet daß**
    alle Funktionsgruppen zusammen mit einem zur Systemsteuerung eingesetzten und als Standardzelle verfügbaren Mikroprozessor- oder Mikrocontrollerkern in einer gemischt analog/digitalen anwendungsspezifischen integrierten Schaltung untergebracht sind, und daß für das Programm für die Systemsteuerung entweder ein RAM-Speicher integriert wird, der nach einem Schaltungsreset über einen äußeren Festwertspeicher, z.B. in Form eines PROMs oder EPROMs geladen wird, oder daß ein ROM mit festem Programm integriert wird.

**Claims**

1. A method for digital signal synthesis and processing in a full-duplex data transmission system for the transmission of digital information by way of a power supply systems by means of narrow-band or band-spreading modulation, whereby for the purpose of incoherent correlation reception an amplified and filtered received signal (X) which is coupled out of the mains network is accumulated after analog-to-digital conversion and multiplication with four digital reference signals (Y) from a sampled-data value memory which is addressed by a programmable cyclic address counter of fixed basic length (20) in a ring structure from a first adder and four registers in such a way that after the expiration of a signal shaping period the in-phase components of H- and L-bit stand in the first and second registers (9 and 10) and the quadrature components of the H- and L-bit stand in the third and fourth register (7 and 8), characterized in that thereafter said values are raised to the second power in four cycle steps and are supplied to a decision device which at first calculates in four cycle steps the values L2 and H2 corresponding to the respective signal shaping energy of an L- and H-bit by means of a second adder (14) and fifth and sixth registers (15 and 16) and determines in a further cycle step the difference L2-H2 for the serial output which is relevant for the bit decision, and that the programmable cyclic address counter (20) simultaneously addresses a memory filled with send signal sampled-data values for the purpose of send signal synthesis, with the output signals of said memory being coupled into the mains network following digital-to-analog conversion, low-pass filtering and amplification, with each change in the data bit to be transmitted always occurring synchronously to the completion of an address counter cycle, thus producing a phase-continuous send signal.

2. A method as claimed in claim 1, characterized in that for the system control and the data transfer a microprocessor, a microcontroller or a digital circuit of comparable function is used which during the send process supplies the programmable cyclic address counter (20) with the data bit to be transmitted, with the desired data rate being adjustable, and which during reception signalizes the end of a signal shaping period to the control unit (28), with the evaluation of the values accumulated in the first, second, third and fourth registers (7 to 10) being initiated precisely for one period of said cycle synchronized with the sampling cycle of the received signal.

3. A method as claimed in claim 1 or 2, characterized in that by using only one sampled-data memory a semi-duplex data transmission system for CPFSK modulation is obtained, with said memory now containing both reference signal sampled values as well as send signal sampled values in different address ranges and with the differentiation of the addressing during sending and receiving being performed via a separate address line which is connected with a microprocessor, a microcontroller or a digital circuit of comparable function used for system control.

4. A method as claimed in claim 1, 2 or 3, characterized in that for the synchronization of the signal synthesis for sending and receiving and for the synchronization of the entire processing of the received signals the mains AC voltage is used as a global reference signal, with the beginning of a data transmission always being coupled with a passage through zero of the mains voltage and with a basic time reference of $1/6^{th}$ of a mains period being obtained on the three-phase mains which can be used in a preferable manner to determine the preamble chip duration and from which the time bases for the various data rates such as 300, 600, 1200, 2400 bit/s in the European 50 Hz mains network can be obtained by integral division.

5. A full-duplex data transmission system with a device for digital signal synthesis and processing for the transmission of digital information by way of a power supply system by means of narrow-band or band-spreading modulation, with the system being configured in such a way that during the reception an amplified and filtered received signal (X) which is coupled out of the mains network reaches a digital multiplier (5) after analog-to-digital conversion, with the second input of said multiplier receiving a reference signal (Y) from a sampled-data memory (24) addressed by a programmable cyclic address counter of fixed base length (20), with each received value being assigned precisely four reference values (Y), according to the inphase and quadrature sampled values of L- and H-bit signal shape each, the obtained products being accumulated in a ring structure of a first adder (6), four registers (7, 8, 9 and 10) and a first switch (11), so that after the expiration of a signal shaping period the inphase components of H- and L-bit are accumulated in the first and second registers (9 and 10) and the quadrature components of H- and L-bit are accumulated in the third and fourth registers (7 and 8), characterized in that thereafter the switch (11), by severing the ring structure consisting of the adder (6) and the register set (7 - 10), supplies the four results from the registers (7 - 10) via a squarer (12) to a decision device consisting of a second switch (13), a second adder (14), fifth and sixth register (15 and 16), which at first calculates in four cycle steps the values L2 and H2 corresponding to the respective signal shaping energy of an L- and H-bit by means of a second adder (14) and the fifth and sixth registers (15 and 16) and determines in a further cycle step in which the second switch (13) is in position II the difference L2-H2 for the serial output which is relevant for the bit decision, and that the programmable cyclic address counter (20) simultaneously addresses a memory (25) filled with send signal sampled values for the purpose of send signal synthesis, with the output signals of said memory being coupled into the mains network following digital-to-analog conversion, low-pass filtering and amplification, with the selection of the sampled-data values of the data bit to be transmitted occurring synchronously with the expiration of an address counter cycle by means of an additional address line (26) to the memory (25), so that a phase-continuous send signal is obtained.

6. A device as claimed in claim 5, characterized in that for the send process the programmable cyclic address counter (20) is supplied with the data bit to be transmitted via a line (21) by a microprocessor, a microcontroller or a digital circuit of comparable function used for system control, with the desired data rate being adjustable by way of a group of junction lines (22), and that during reception the end of a signal shaping period is signalized to the control unit (28) by the microprocessor, microcontroller or digital circuit of comparable function used for system control, and that thereafter, synchronized with the sampling cycle of the received signal, the first switch (11) is brought to position II for one period of said cycle in order to perform the evaluation of the values accumulated in the first, second, third and fourth registers (7 - 10), so that finally the fifth register (15) contains the desired result L2-H2 which can be read out serially via a line (17) by the microprocessor, microcontroller or digital circuit of comparable function used for system control by means of any random cycle which is entered via a line (18), with the first bit present in line (17) without any reading cycle directly corresponding to the immediately received data bit.

7. A device as claimed in claim 5 or claim 6, characterized in that the beginning of a data transmission is signalized by means of a preamble, during the detection of which an intelligent evaluation of difference of L2 - H2 is made in such a way that a microprocessor, microcontroller or digital circuit of comparable function used for system control serially reads the difference L2-H2 via a line (17) from the fifth register (15) and compares by software with a freely selectable threshold, with said threshold being chosen as a percentage rate of the maximally possible value L2 or H2 and with the threshold being capable of being set adaptively, depending on received interfering and/or useful signal energy in order to optimize the detection probability of a preamble with the simultaneously lowest possible false alarm probability.

8. A device as claimed in one or several of the claims 5 to 7, characterized in that by using only one sampled-data memory instead of the two memories (24 and 25) a semi-duplex data transmission system for CPFSK modulation is obtained, with said memory now containing both reference signal sampled values as well as send signal sampled values in different address ranges and with the differentiation of the addressing during sending and receiving being performed via a separate address line which is not connected with the programmable cyclic address counter (20), but instead with a microprocessor, a microcontroller or a digital circuit of comparable function used for system control.

9. A device as claimed in one or several of the claims 5 to 8, characterized in that for the synchronization of the signal synthesis for sending and receiving and for the synchronization of the entire processing of the received signals the mains AC voltage is used as a global reference signal in that the passages through zero of the mains AC voltage being signalized for example to an interrupt input of a microprocessor, microcontroller or a digital circuit of comparable function which is used for system control and which performs suitable subdivisions of the zero crossing time reference by means of internal timers, with the beginning of a data transmission always being coupled to a passage through zero of the mains voltage, and with a basic time reference of $1/6^{th}$ of a mains period being obtained on the three-phase mains which can be used in a preferable manner to determine the preamble chip duration and from which the time bases for the various data rates such as 300, 600, 1200, 2400 bit/s in the European 50 Hz mains network can be obtained by integral division.

10. A device as claimed in one or several of the claims 5 to 9, characterized in that with the exception of the analog-to-digital converter (30), the sampled-data memories (24 and 25) and the digital-to-analog converter (27), the functional groups are housed in a purely digital application-specific integrated circuit.

11. A device as claimed in one or several of the claims 5 to 10, characterized in that all functional groups are housed in a mixed analog/digital application-specific integrated circuit such as a standard cell or full customer circuit, with the memories (24 and 25) preferably being designed as RAM cells whose content is loaded after a circuit reset by way of an external read-only memory, e.g. in form of a PROM or EPROM.

12. A device as claimed in one or several of the claims 5 to 11, characterized in that all functional groups, in combination with a microprocessor or microcontroller core which is used for system control and is available as a standard cell, are housed in a mixed analog/digital application-specific integrated circuit and that either a RAM memory is integrated for the program for the system control which is loaded after a circuit reset by way of an external read-only memory such as a PROM or EPROM, or that a ROM with a fixed program is integrated.

**Revendications**

1. Procédé pour la synthèse et le traitement numériques de signaux dans un système de transmission de données en duplex intégral, en vue de la transmission d'informations numériques via des réseaux de distribution électrique à l'aide d'une modulation à bande étroite ou avec étalage de la bande, un signal de réception (X) découplé du réseau électrique, amplifié et filtré, après avoir subi une conversion analogique/numérique et une multiplication avec chaque fois quatre signaux de référence numériques (Y) provenant d'une mémoire de valeurs de lecture sélectionnée par un compteur d'adressage (20) cyclique programmable, à longueur de base fixe, étant cumulé, pour une réception de corrélation incohérente, dans une structure circulaire formée d'un premier additionneur et de quatre registres, de manière telle que, après écoulement d'une durée de formage de signaux, les composantes en phase des bits H et L soient inscrites dans le premier (9) et le deuxième (10) registre et les composantes de quadrature des bits H et L soient inscrites dans le troisième (7) et le quatrième (8) registre, caractérisé par le fait qu'ensuite, au cours de quatre étapes de cycle, on élève ces valeurs au carré et on les envoie à un dispositif de décision qui calcule d'abord, en quatre étapes de cycle, à l'aide d'un second additionneur (14) et d'un cinquième (15) et d'un sixième (16) registre, les valeurs $L^2$ et $H^2$ correspondant à l'énergie de formage de signal respective d'un bit L ou d'un bit H et qui, au cours d'une étape de cycle supplémentaire, détermine la différence $L^2$-$H^2$ essentielle pour la décision de bit, en vue d'une sortie en série, et par le fait que le compteur d'adressage (20) cyclique programmable, à des fins de synthèse de signaux d'émission, sélectionne en même temps une mémoire qui est remplie avec des valeurs de lecture de signal d'émission et dont les signaux de sortie, après avoir subi une conversion numérique/analogique, un filtrage passe-bas et une amplification, sont injectés dans le réseau de distribution, tout changement au niveau du bit de données à envoyer se faisant toujours en synchronisme avec le déroulement d'un cycle du compteur d'adressage, de sorte que l'on obtient un signal d'émission à phase continue.

2. Procédé selon la revendication 1, caractérisé par le fait que, pour la commande du système et le transfert des données, on utilise un microprocesseur, un microcontrôleur ou un circuit numérique de fonction similaire qui, lors de l'émission, achemine au compteur d'adressage (20) cyclique programmable le bit de données à envoyer, avec possibilité de réglage du débit de données souhaité, et qui, lors de la réception, indique au dispositif de commande (28) la fin d'une durée de formage de signal, l'exploitation des valeurs cumulées dans les premier, deuxième, troisième et quatrième registres (7-10) étant déclenchée en synchronisme avec la cadence de lecture du signal reçu, exactement pour une période de cette cadence.

3. Procédé selon la revendication 1 ou 2, caractérisé par le fait que l'on crée, par utilisation d'une mémoire unique de valeurs de lecture, un système de transmission de données en semi-duplex pour une modulation CPFSK, ladite mémoire contenant, dans des zones d'adresse différentes, à la fois les valeurs de lecture de signaux de référence et les valeurs de lecture de signaux d'émission, et la distinction entre les adressages lors de l'émission et de la réception étant opérée via une ligne d'adressage séparée qui est connectée à un microprocesseur, un microcontrôleur ou un circuit numérique de fonction similaire, utilisé pour assurer la commande du système.

4. Procédé selon la revendication 1, 2 ou 3, caractérisé par le fait que l'on utilise la tension alternative du réseau en tant que signal de référence global pour la synchronisation de la synthèse de signaux lors de l'émission et de la réception et pour la synchronisation de l'ensemble du traitement des signaux reçus, le début d'une transmission de données étant toujours couplé à un passage par zéro de la tension du réseau, et une trame de temps de base de 1/6$^e$ de période du réseau étant obtenue sur le réseau triphasé, laquelle trame peut être utilisée avantageusement pour la définition de la durée de la puce de préambule et pour l'obtention, par division par des nombres entiers, des bases de temps pour différents débits de données, par exemple 300, 600, 1200, 2400 bits/s dans le réseau européen à 50 Hz.

5. Système de transmission de données en duplex intégral, comprenant un dispositif pour la synthèse et le traitement numériques de signaux, en vue de la transmission d'informations numériques via des réseaux de distribution électrique à l'aide d'une modulation à bande étroite ou avec étalage de la bande, le système étant agencé de telle manière que lors de la réception, un signal de réception (X) découplé du réseau électrique, amplifié et filtré, après avoir subi une conversion analogique/numérique, arrive dans un multiplicateur numérique (5) dont la deuxième entrée reçoit un signal de référence (Y) provenant d'une mémoire de valeurs de lecture (24) sélectionnée par un compteur d'adressage (20) cyclique programmable, à longueur de base fixe, exactement quatre valeurs de référence (Y) - correspondant aux valeurs de lecture en phase et de déphasage en quadrature, chaque fois de forme de signal à bit L et H - étant associées à chaque valeur de réception, les produits formés étant cumulés dans une structure circulaire constituée d'un premier additionneur (6), de quatre registres (7, 8, 9 et 10) et d'un premier interrupteur (11), de manière telle que, après écoulement d'une durée de formage de signaux, les composantes en phase des bits H et L soient cumulées dans le premier (9) et le deuxième (10) registre et les composantes de quadrature des bits H et L soient cumulées dans le troisième (7) et le quatrième (8) registre, caractérisé par le fait qu'ensuite, l'interrupteur (11), en sectionnant la structure circulaire formée de l'additionneur (6) et de l'ensemble de registres (7-10), achemine les quatre résultats à partir des registres (7-10), via un élément de quadrature (12), à un dispositif de décision qui est constitué d'un second interrupteur (13), d'un second additionneur (14) et d'un cinquième (15) et d'un sixième (16) registre et qui calcule d'abord, en quatre étapes de cycle, à l'aide du second additionneur (14) et du cinquième (15) et du sixième (16) registre, les valeurs $L^2$ et $H^2$ correspondant à l'énergie de formage de signal respective d'un bit H ou d'un bit L et, au cours d'une étape de cycle supplémentaire lors de laquelle le second interrupteur (13) se trouve dans la position II, détermine la différence $L^2$-$H^2$ essentielle pour la décision de bit, en vue d'une sortie en série, et par le fait que le compteur d'adressage (20) cyclique programmable, à des fins de synthèse de signaux d'émission, sélectionne en même temps une mémoire (25) qui est remplie avec des valeurs de lecture de signal d'émission et dont les signaux de sortie, après avoir subi une conversion numérique/analogique, un filtrage passe-bas et une amplification, sont injectés dans le réseau de distribution, la sélection des valeurs de lecture du bit de données à envoyer - H ou L - étant opérée en synchronisme avec le déroulement d'un cycle du compteur d'adressage, via une ligne d'adressage (26) supplémentaire vers la mémoire (25), de sorte que l'on obtient un signal d'émission à phase continue.

6. Dispositif selon la revendication 5, caractérisé par le fait que, pour l'opération d'émission, le bit de données à envoyer est acheminé au compteur d'adressage (20) cyclique programmable, via une ligne (21), par un microprocesseur, un microcontrôleur ou un circuit numérique de fonction similaire, utilisé pour la commande du système, le débit de données souhaité pouvant être réglé via un groupe de lignes (22), par le fait que lors de la réception, le microprocesseur, le microcontrôleur ou le circuit numérique de fonction similaire, utilisé pour la commande du système, indique au dispositif de commande (28) la fin d'une durée de formage de signal, et par le fait qu'ensuite, en synchronisme avec la cadence de lecture du signal reçu, le premier interrupteur (11) est amené dans la position II pendant une période de cette cadence, aux fins de réaliser l'exploitation des valeurs cumulées dans les premier, deuxième, troisième et quatrième registres (7-10), de telle sorte que le cinquième registre (15) contienne finalement le résultat $L^2$-$H^2$ recherché, qui peut être lu de façon sérielle, via une ligne (17), par le microprocesseur, le microcontrôleur ou le circuit numérique de fonction similaire, utilisé pour la commande du système, avec une cadence quelconque devant être entrée via une ligne (18), le premier bit qui est appliqué sans cadence de lecture à la ligne (17) correspondant directement au bit de données qui vient d'être reçu à cet instant.

7. Dispositif selon la revendication 5 ou 6, caractérisé par le fait que l'on signale le début d'une transmission de données par un préambule dont la détection déclenche une évaluation intelligente de la différence $L^2$-$H^2$, en réalisant la lecture de ladite différence $L^2$-$H^2$ dans le cinquième registre (15), de façon sérielle via une ligne (17), à l'aide d'un microprocesseur, d'un microcontrôleur ou d'un circuit numérique de fonction similaire, utilisé pour assurer la commande du système, qui compare cette différence à l'aide d'un logiciel avec un seuil pouvant être choisi librement, ledit seuil étant sélectionné comme pourcentage de la valeur $L^2$ ou $H^2$ maximale possible et pouvant être réglé de façon adaptative, en fonction de l'énergie reçue du signal parasite et/ou du signal utile, afin d'optimiser la probabilité de découverte d'un préambule, tout en réduisant à un minimum la probabilité d'une fausse alerte.

8. Dispositif selon une ou plusieurs des revendications 5 à 7, caractérisé par le fait que l'on crée, par utilisation d'une mémoire unique de valeurs de lecture à la place des deux mémoires (24 et 25), un système de transmission de données en semi-duplex pour une modulation CPFSK, ladite mémoire contenant, dans des zones d'adresse différentes, à la fois les valeurs de lecture de signaux de référence et les valeurs de lecture de signaux d'émission, et la distinction entre les adressages lors de l'émission et de la réception étant opérée via une ligne d'adressage séparée qui n'est pas connectée au compteur d'adressage (20) cyclique programmable mais à un microprocesseur, un microcontrôleur ou un circuit numérique de fonction similaire, utilisé pour assurer la commande du système.

9. Dispositif selon une ou plusieurs des revendications 5 à 8, caractérisé par le fait que l'on utilise la tension alternative du réseau en tant que signal de référence global pour la synchronisation des synthétiseurs de signaux lors de l'émission et de la réception et pour la synchronisation du traitement des signaux reçus, en signalant les passages par zéro de la tension alternative du réseau par exemple à une entrée d'interruption d'un microprocesseur, d'un microcontrôleur ou d'un circuit numérique de fonction similaire, utilisé pour assurer la commande du système, qui effectue des subdivisions appropriées de la trame de temps de passage par zéro à l'aide d'horloges internes, le début d'une transmission de données étant toujours couplé à un passage par zéro de la tension du réseau, et une trame de temps de base de $1/6^e$ de période du réseau étant obtenue sur le réseau triphasé, laquelle trame peut être utilisée avantageusement pour la définition de la durée de la puce de préambule et pour l'obtention, par division par des nombres entiers, des bases de temps pour différents débits de données, par exemple 300, 600, 1200, 2400 bits/s dans le réseau européen à 50 Hz.

10. Dispositif selon une ou plusieurs des revendications 5 à 9, caractérisé par le fait qu'à l'exception du convertisseur analogique/numérique (30), des mémoires de valeurs de lecture (24 et 25) et du convertisseur numérique/analogique (27), les groupes fonctionnels sont logés dans un circuit intégré purement numérique, spécifique à l'application.

**11.** Dispositif selon une ou plusieurs des revendications 5 à 10, caractérisé par le fait que tous les groupes fonctionnels sont logés dans un circuit intégré analogique/numérique mixte, spécifique à l'application, par exemple dans un circuit à cellule standard ou réalisé entièrement sur commande, les mémoires (24 et 25) étant de préférence réalisées sous la forme de cellules RAM dont le contenu, après une remise à l'état initial du circuit, est chargé via une mémoire morte externe, par exemple sous forme de PROM ou d'EPROM.

**12.** Dispositif selon une ou plusieurs des revendications 5 à 11, caractérisé par le fait que tous les groupes fonctionnels, conjointement avec un noyau de microprocesseur ou de microcontrôleur utilisé pour assurer la commande du système et disponible comme cellule standard, sont logés dans un circuit intégré analogique/numérique mixte, spécifique à l'application, et par le fait que pour le programme assurant la commande du système, on intègre soit une mémoire RAM qui, après une remise à l'état initial du circuit, est chargée via une mémoire morte externe, par exemple sous forme de PROM ou d'EPROM, soit une mémoire ROM à programme fixe.

Fig. 1

EP 0 671 822 B1

EP 0 671 822 B1

TC_END (29) aktiviert
Z·N·T$_a$ erreicht $\Rightarrow$ i=0 ↝

| Taktschritt → (f$_m$=2,4MHz) | 1 | 2 | 3 | 4 | 5 | |
|---|---|---|---|---|---|---|
| Register 15 →   0 | $L_I^2$ | $H_I^2$ | $L_I^2+L_Q^2$ | $H^2=H_I^2+H_Q^2$ | $\mathbf{L^2\text{-}H^2}$ | |
| Register 16 →   0 | 0 | $L_I^2$ | $H_I^2$ | $L^2=L_I^2+L_Q^2$ | $H^2$ | |
| Schalter 11 →   Pos. I | Pos. II | | | | Pos. I | |
| Schalter 13 →   Pos. I | | | | | Pos. II | Pos. I |

Fig. 2

EP 0 671 822 B1

serieller Ausgang (17)

/// undefiniert / L²-H² gültig

RESET

(11) in Pos. II    TC_END (29)

$f_m$=2,4MHz (28a)

$f_a$=600 kHz (28b)

| $L_{I0}$ | $H_{I0}$ | $L_{Q0}$ | $H_{Q0}$ | $L_{I1}$ | $H_{I1}$ | $L_{Q1}$ | $H_{Q1}$ .... | | | | | | | | | | | | | | | $L_{I0}$ | $H_{I0}$ | $L_{Q0}$ | $H_{Q0}$ |
|---|---|---|---|---|---|---|---|---|---|---|---|---|---|---|---|---|---|---|---|---|---|---|---|---|---|
| 0 | 1 | 2 | 3 | 4 | 5 | 6 | 7 | 8 | 9 | 10 | 11 | 12 | 493 | 494 | 495 | 496 | 497 | 498 | 499 | 0 | 1 | 2 | 3 |

Adresse (23)

ADW_1  ADW_2  ADW_3  ADW_4  Abtastwerte  ADW_124  ADW_125  ADW_1

Abtastwert einlesen

A/D-Wandlung starten

S_BIT (21)

A9 (26)

Fig. 3